# EUROPÄISCHE PATENTSCHRIFT

(11) **EP 2 640 608 B1**
(45) Veröffentlichungstag und Bekanntmachung des Hinweises auf die Patenterteilung: **14.01.2015**
(21) Anmeldenummer: 11805392.5
(22) Anmeldetag: 14.11.2011
(51) Int. Cl.: B60R 11/04

(54) **VORRICHTUNG ALS DIEBSTAHLSCHUTZ FÜR EINE KAMERAEINHEIT**
THEFT PROTECTION DEVICE FOR A CAMERA UNIT
DISPOSITIF DE PROTECTION ANTIVOL POUR UN ENSEMBLE CAMÉRA

(30) Priorität: 16.11.2010 DE 102010060603
(43) Veröffentlichungstag der Anmeldung: 25.09.2013
(73) Patentinhaber: Huf Hülsbeck & Fürst GmbH & Co. KG, 42551 Velbert (DE)
(72) Erfinder: BARTHEL, Joachim, 45329 Essen (DE)
(86) Internationale Anmeldenummer: PCT/DE2011/075271
(87) Internationale Veröffentlichungsnummer: WO 2012/065604

(56) Entgegenhaltungen:
- EP-A2- 2 144 435
- DE-A1- 10 204 764
- DE-A1-102006 048 373
- DE-A1-102008 008 656
- DE-A1-102010 001 108
- JP-A- 2003 291 783
- JP-A- 2004 216 958
- JP-A- 2004 216 976
- US-A1- 2009 128 687
- US-A1- 2010 073 478

## Beschreibung

Die Erfindung betrifft eine Vorrichtung als Diebstahlschutz für eine Kameraeinheit, die an einem beweglichen Schutzelement eines Kraftfahrzeuges angeordnet ist und die Kameraeinheit zur Bilderfassung des Außenbereiches dient.

Vorrichtungen zur Überwachung des Rückraumes von Kraftfahrzeugen sind hinlänglich bekannt. So ist beispielsweise aus DE 4336288 eine Vorrichtung zum Überwachen des Rück- bzw. Frontraumes eines einparkenden Kraftfahrzeuges mit einer im Heck bzw. in der Front des Fahrzeuges eingebauten Videokamera bekannt. Mit dieser Videokamera steht eine Sicht- und Kontrolleinrichtung im Blickfeld des Fahrzeugführers in Verbindung, welche mit einem Bildschirm ausgestattet ist. Die Videokamera ist mit Mitteln zum Schwenken in Abhängigkeit von elektrischen Ansteuersignalen ausgestattet und mit einer objektbezogenen Bildschärfesteuerung ausgestattet. Nachteiligerweise hat sich gezeigt, dass die Kameraeinheit, die eine relativ teuere Einheit darstellt, leicht durch Diebstahl entwendet werden kann.

Als Ausgangspunkt der vorliegenden Erfindung kann die DE 43 36 288 C1 betrachtet werden. Sie zeigt eine Kamera 01 und um eine Achse 11 schwenkbare Klappe 09 zum Schutz der Kamera 01. Die Klappe 09 nimmt zwei Endstellungen ein, eine, bei der sie voll geöffnet ist, und eine, bei sie geschlossen ist. Die Kamera 01 ist an einem Fahrzeugfesten Teil 04 linear geführt und läßt sich über einen Motor 05 nach außen bewegen. Diese Bewegung wird über eine Schubstange 12 auf die Klappe 09 übertragen, die sich dadurch für den Austritt der Kamera 01 verschwenkt. Es sind keine Mittel vorgesehen, um die Kamera 02 bei geöffneter Klappe 09 gegen Diebstahl zu sichern.

Die JP 2004 216 976 A zeigt eine Kameraeinheit 12 und ein unbewegliches Schutzelement 2 für die Kamera. Die Kameraeinheit 12 ist in einer fahrzeugfesten Aufnahme 3 gehalten. Innenseitig am Fahrzeug lösbare Sicherungselemente 18 sorgen für einen Diebstahlschutz.

Die DE 10 2006 048 373 A1 wie auch die DE 10 2008 008 656 A1 zeigen jeweils ein Schutzelement für eine Kamera, das in eine Offenstellung und geschlossene Stellung bringbar ist. Die Kamera ist nicht am Schutzelement angebracht. Eine Diebstahlsicherung der Kamera bei Offenstellung des Schutzelementes fehlt.

Die EP 2 144 435 A2 zeigt eine Kamera 3, die in einer Aufnahme 2 sitzt. Diese ist schwenkbeweglich in einem ortsfesten Gehäuse 1 gehalten. Die Aufnahme 2 dient nicht zum Schutz der Kamera, da sie nicht als Verschluss dient, d.h. sie ist nicht in eine Offenstellung und Schließstellung bringbar. Über einen Diebstahlschutz für die Kameraeinheit 3 , die in der beweglichen Aufnahme 2 sitzt, schweigt die EP 2 144 435 A2.

Aufgabe der Erfindung ist es, das oben aufgezeigte Problem zu umgehen und die Kameraeinheit sicher am Kraftfahrzeug einzubauen, zugleich aber die Funktionalität und den Überwachungsbereich nicht zu beschränken.

Zur Lösung dieser Aufgabe wird eine Vorrichtung mit sämtlichen Merkmalen des Anspruchs 1 vorgeschlagen. In den abhängigen Ansprüchen sind bevorzugte Weiterbildungen ausgeführt.

Erfindungsgemäß ist eine Vorrichtung als Diebstahlschutz für eine Kameraeinheit vorgesehen, die an einem beweglichen Schutzelement eines Kraftfahrzeuges angeordnet ist und die Kameraeinheit zur Bilderfassung des Außenbereiches des Kraftfahrzeuges dient. Hierbei kann das Schutzelement zwischen einer Schließstellung und einer Offenstellung bewegt werden. In der Schließstellung befindet sich die Kameraeinheit in der Ruhelage. In der Offenstellung hingegen befindet sich die Kameraeinheit in der Betriebslage, in der eine Bilderfassung des Außenbereiches erfolgt. Das Schutzelement weist innenseitig, auf der dem Außenbereich abgewandten Seite des Schutzelementes eine Aufnahme für die Kameraeinheit auf. An der Aufnahme ist ein Sicherungselement angeordnet, das zuverlässig die Kameraeinheit in der Aufnahme hält. Zudem ist mindestens ein Befestigungsmittel vorgesehen, wodurch das Sicherungselement innenseitig des Schutzelementes befestigt ist und das Befestigungsmittel derart vom Schutzelement beabstandet ist, dass in der Offenstellung des Schutzelementes das Befestigungsmittel nicht missbräuchlich betätigbar ist. Das Befestigungsmittel kann von einer unberechtigten Person über die Hand oder ein Werkzeug nicht erreicht werden, um in der Offenstellung des Schutzelementes ein Lösen des Befestigungsmittels zu erzielen mit der Absicht, die Kameraeinheit zu entwenden. Das Sicherungselement kann beispielsweise unmittelbar an der Aufnahme befestigt sein, in der die Kameraeinheit sich befindet. In einer bevorzugten Ausführungsform der Erfindung umgibt die Aufnahme, das Sicherungselement sowie das Schutzelement zumindest bereichsweise die Kameraeinheit. Obwohl das Sicherungselement unmittelbar mit der Aufnahme befestigt sein kann, hält das Sicherungselement zuverlässig die Kameraeinheit in der Aufnahme und verhindert wirkungsvoll, dass die Kameraeinheit widerrechtlich aus der Aufnahme entwendet werden kann. Bevorzugt ist die Kameraeinheit starr in der Aufnahme befestigt, wobei die Aufnahme einstückig mit dem Schutzelement verbunden sein kann. In der Schließstellung des Schutzelementes befindet sich die Kameraeinheit vollständig geschützt durch das Schutzelement innerhalb des Kraftfahrzeuges. Während der Bewegung des Schutzelementes von der Schließstellung in die Offenstellung bewegt sich die Kameraeinheit entsprechend mit, da vorteilhafterweise eine starre Verbindung zwischen der Kameraeinheit und der Aufnahme sowie der Innenseite des Schutzelementes besteht. Das Befestigungsmittel ist zudem derart vom Schutzelement und von dem relevanten Bereich zur Bilderfassung der Kameraeinheit entfernt, so dass der Überwachungsbereich zur Bilderfassung nicht eingeschränkt ist.

Bei einer weiteren Ausführungsform der Erfindung kann die Aufnahme zwei Wände aufweisen, die die Kameraeinheit seitlich umfassen. Somit ist es denkbar, dass die Innenseite des Schutzelementes sowie die beiden Wände der Aufnahme ein U-Profil für die Kameraeinheit bilden. Das Sicherungselement ist vorteilhafterweise derart an der Aufnahme angeordnet, dass die Kameraeinheit vollständig umfasst wird, insbesondere durch das Sicherungselement, die Aufnahme und dem Schutzelement umgeben ist. Die Wände der Aufnahme dienen dazu, die Kameraeinheit vor äußeren Einflüssen, wie Verschmutzung, Beschädigung, Vandalismus oder Diebstahl zu schützen.

Ebenfalls ist es denkbar, dass das Sicherungselement mindestens ein Halteelement aufweist, das in die Aufnahme, insbesondere in mindestens eine Wand der Aufnahme eingreift. Somit kann das Sicherungselement zum einen über das Befestigungsmittel am Schutzelement und/oder an der Kameraeinheit und/oder an der Aufnahme befestigt sein. Zum anderen erfolgt eine weitere Zusatzbefestigung des Sicherungselementes über das Halteelement an der Aufnahme, wodurch gleichzeitig die Sicherheit der Kameraeinheit in der Aufnahme erhöht wird.

Vorteilhafterweise kann die Kameraeinheit an Wänden der Aufnahme, innenseitig am Schutzelement sowie am Sicherungselement anliegen, wobei die Kameraeinheit durch eine Öffnung hindurchragt, wobei die Öffnung durch die Wände, das Schutzelement sowie durch das Sicherungselement gebildet ist. Zweckmäßigerweise ragt die Kameraeinheit mit ihrem optischen Teil zur Bilderfassung, insbesondere der Linse durch die Öffnung, um eine zufriedenstellende Bilderfassung des Außenbereiches in der Offenstellung des Schutzelementes zu erzielen.

Ebenfalls ist es denkbar, dass das Sicherungselement und/oder die Aufnahme derart zur Außenkontur der Kameraeinheit angepasst ist, dass die Kameraeinheit aus der Öffnung nicht entnehmbar ist. Beispielsweise ist es möglich, dass die Kameraeinheit mit einem Absatz ausgeführt ist, der an einem Sitz des Sicherungselementes anliegt. Der Sitz des Sicherungselementes dient hierbei als Verjüngung und/oder Verengung in Richtung Öffnung, durch die die Kameraeinheit ragt. Somit verhindert der Absatz an der Kameraeinheit sowie der Sitz am Sicherungselement, dass die Kameraeinheit weiter in Richtung Öffnung missbräuchlich aus der Aufnahme entwendet werden kann. Der Sitz des Sicherungselementes dient hierbei als eine Art Sicherungsanschlag, der ein weiteres Herausziehen der Kameraeinheit aus der Aufnahme verhindert.

Bevorzugt kann/können das/die Befestigungsmittel mindestens ein erstes Befestigungsmittel an der Aufnahme und/oder ein zweites Befestigungsmittel aufweisen, wobei insbesondere das erste und das zweite Befestigungsmittel derart zusammenwirken, dass eine Befestigung des Sicherungselementes in der Aufnahme erzielbar ist. Hierbei kann das Befestigungsmittel dazu dienen, das Sicherungselement mit der Aufnahme, mit der Wand der Aufnahme, mit der Kameraeinheit oder mit dem Schutzelement befestigend zu verbinden.

Bevorzugt kann das erste Befestigungsmittel ein Gewinde sein, das in der Aufnahme eingebracht ist, wobei in das Gewinde das zweite Befestigungsmittel als Schraubenelement, das durch eine Bohrung des Sicherungselementes verläuft, eingreift. Ebenfalls ist es denkbar, dass das erste und das zweite Befestigungsmittel als Rastmittel ausgeführt sind, wodurch eine schnelle Montage der Gesamtvorrichtung erzielbar ist. Alternativ kann das Befestigungsmittel auch eine stoffschlüssige Befestigung des Sicherungselementes an der Aufnahme, an der Wand der Aufnahme, an der Kameraeinheit oder direkt am Schutzelement bewirken.

Zweckmäßigerweise kann das Sicherungselement an der dem Halteelement gegenüberliegenden Seite mit zwei Armen ausgeführt sein, durch die das erste und/oder das zweite Befestigungsmittel sich erstreckt. Hierbei kann das Sicherungselement eine gewisse Y-Form aufgrund der beiden Arme aufweisen, die dazu dienen, zwei Befestigungspunkte für das erste und das zweite Befestigungsmittel zu definieren.

Gemäß einem weiteren bevorzugten Weiterbildung der Erfindung können mindestens zwei Halteelemente vorgesehen sein, die formschlüssig in die Aufnahme eingreifen, insbesondere können zwei Halteelemente hackenförmig am Sicherungselement ausgebildet sein, die in jeweils eine Ausnehmung der Aufnahme eingreifen. Diese hakenförmigen Halteelemente bilden einen zuverlässigen Formschluss mit der Aufnahme, insbesondere mit den Wänden der Aufnahme, die jeweils mit einer Ausnehmung für ein Halteelement ausgeführt sind.

In einer bevorzugten Ausführungsform der Erfindung kann ausgehend von der Aufnahme mindestens ein Schwenkelement bis zu einer Drehachse des Schutzelementes sich erstrecken, insbesondere kann die Aufnahme mit dem Schwenkelement ein monolithisches Bauteil bilden. Die Aufnahme mit ihren Wänden kann materialeinheitlich mit dem Schwenkelement und/oder dem Schutzelement ausgeführt sein. Gleichzeitig ist die Kameraeinheit unbeweglich in der Aufnahme gehalten, so dass bei einer Bewegung des Schutzelementes zwischen der Schließstellung und der Offenstellung auch die Kameraeinheit um die Drehachse sich verschwenkt.

Denkbar ist, dass ein Antrieb vorgesehen ist, der einen Mechanismus antreibt, der mit dem Schwenkelement in Wirkverbindung steht. Hierbei kann der Antrieb ein Linearantrieb oder ein Rotationsantrieb sein. Der Antrieb kann beispielsweise am Schwenkelement, an der Kameraeinheit, an der Aufnahme oder direkt am Schutzelement angreifen. Der Antrieb kann beispielsweise einen Stellantrieb aufweisen, der z.B. eine lineare Hubbewegung ausführt, um den Mechanismus anzutreiben. Der Antrieb kann zudem einen Motor, insbesondere einen Elektromotor aufweisen bzw. als ein Motor, insbesondere als ein Elektromotor ausgebildet sein. Vorteilhafterweise kann auch der Motor und/oder der Mechanismus selbsthemmend ausgeführt sein, so dass eine manuelle Bewegung des mit dem Motor verbundenen Schutzelementes nicht möglich ist. D.h., wird beispielsweise an dem Schutzelement gezogen, verhindert der selbsthemmend wirkende Mechanismus bzw. der selbsthemmend ausgebildete Motor eine Bewegung des Schutzelementes und damit auch die Bewegung der Kameraeinheit. Somit stellt ein selbsthemmend ausgebildeter Motor sowie auch der selbsthemmend ausgeführte Mechanismus einen wirksamen Diebstahlschutz in der Schließstellung des Schutzelementes für die Kameraeinheit dar.

In einer Ausführungsform der Erfindung kann der Mechanismus einen Hebel aufweisen, der bewegbar um die Drehachse gelagert ist, wobei gleichzeitig der Hebel mit dem Schwenkelement drehfest miteinander verbunden ist. Alternativ und/oder zusätzlich kann der Antrieb als Rotationsantrieb ausgeführt sein, der über beispielsweise eine Kurbel, teilweise im Uhrzeigersinn oder entgegen dem Uhrzeigersinn drehen kann. Die Kurbel kann auf den Hebel oder auf das Schwenkelement wirken, so dass über die Bewegung der Kurbel eine Drehbewegung des Hebels und/oder des Schwenkelementes erzielbar ist.

Vorzugweise kann das Schutzelement außenseitig ein Designelement und/oder ein Emblem aufweisen. Ein Emblem im Sinne der Erfindung ist insbesondere ein Kennzeichen für eine Kraftfahrzeugmarke, insbesondere eine Automobilmarke. Dabei kann das Emblem zweidimensional oder dreidimensional ausgebildet sein. Vorteilhafterweise ist das Emblem in jeder Stellung des Schutzelementes voll für den Betrachter sichtbar.

Vorteilhafterweise kann für die Offenstellung und/oder für die Schließstellung mindestens ein Anschlag für den Mechanismus vorgesehen sein, wobei insbesondere in der Schließstellung der Anschlag durch das Gehäuse gebildet ist, an dem das Schutzelement angreift, und/oder in der Offenstellung der Anschlag durch das Gehäuse gebildet ist, an dem das Schwenkelement angreift. An dem Schutzelement und/oder am Gehäuse kann eine Dichtung angeordnet sein, bei der in der Schließstellung die Dichtung verhindert, dass in der Ruhelage Umwelteinflüsse die Kameraeinheit beeinflussen.

Zweckmäßigerweise kann ein an der Fahrzeugkarosserie befestigtes Gehäuse vorgesehen sein, das eine Einbuchtung aufweist, in der sich die Kameraeinheit in der Ruhelage befindet. In der Schließstellung des Schutzelementes und in der Ruhelage der Kameraeinheit befindet sich die Kameraeinheit geschützt innerhalb der Einbuchtung des Gehäuses. In der Offenstellung des Schutzelementes hingegen ragt die Kameraeinheit zumindest mit ihrem wesentlichen Teil aus der Einbuchtung des Gehäuses heraus, um wirkungsvoll eine Bilderfassung des Außenbereiches durchführen zu können.

Die Montagefreundlichkeit kann dadurch erhöht werden, dass der Antrieb und/oder ein Teil des Mechanismus, insbesondere der Hebel außenseitig am Gehäuse angeordnet ist. Das bedeutet, dass der Antrieb sowie der Mechanismus zwar im nicht sichtbaren Bereich innenseitig innerhalb des Kraftfahrzeuges befestigt ist, jedoch die Befestigung außenseitig am Gehäuse erfolgt. Vorteilhafterweise ist der Antrieb über eine Rastverbindung und/oder über eine form- und/oder kraftschlüssige Verbindung mit dem Gehäuse befestigt. Zudem kann es vorteilhaft sein, dass die Außenkontur des Antriebs zumindest bereichsweise der geometrischen Kontur des Gehäuses angepasst ist, so dass eine kompakte Gesamtkonstruktion erzielbar ist, die ein geringes Bauvolumen benötigt. Bevorzugt kann der Antrieb und/oder der Hebel außenseitig am Gehäuse angeordnet sein.

Der Erfindungsgedanke der Erfindung bezieht sich auf ein Kraftfahrzeug, das als ein Lastkraftwagen oder ein Personenkraftwagen ausgebildet sein kann. Das Kraftfahrzeug kann ferner ein Boot bzw. ein Schiff sein. Ebenso ist es denkbar, dass das Kraftfahrzeug als ein Nutzfahrzeug, beispielsweise ein Bagger, eine Raupe, ein Kran etc. ausgebildet ist. Insbesondere vorteilhaft ist, wenn das Kraftfahrzeug zwei oder mehrere derartige Vorrichtungen aufweist. Dabei können mehrere Vorrichtungen derart miteinander gekoppelt sein, dass sie parallel zueinander betrieben werden können. Die Vorrichtung kann ferner einen Mechanismus aufweisen, der mindestens zwei voneinander beabstandete Schwenkelemente und/oder Hebel aufweist.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Seitenansicht auf eine erfindungsgemäße Vorrichtung für ein Kraftfahrzeug, bei der die Kameraeinheit in Betriebslage sich befindet,
- Fig. 2: eine Explosionsansicht der Fig. 1,
- Fig. 3: der wesentliche Teil der in Fig. 1 gezeigten Vorrichtung, wobei die Kameraeinheit in der Ruhelage sich befindet und
- Fig. 4: eine weitere Detailansicht auf die erfindungsgemäße Vorrichtung gemäß Fig. 1.

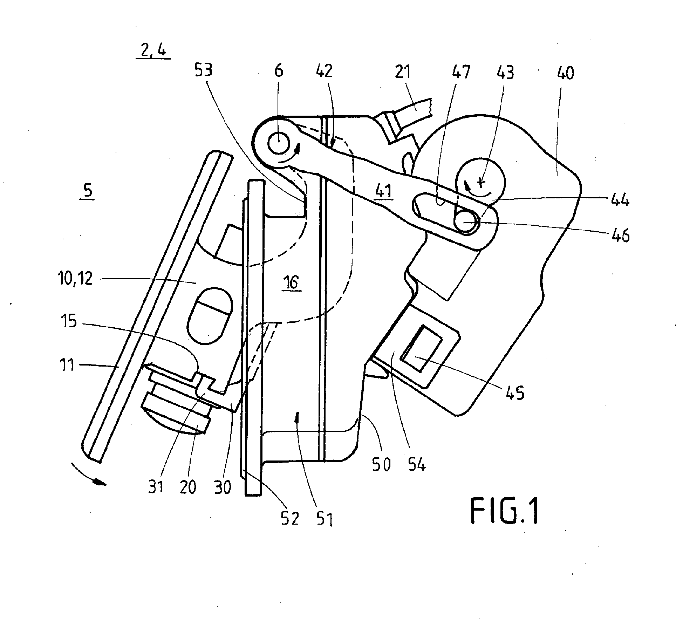

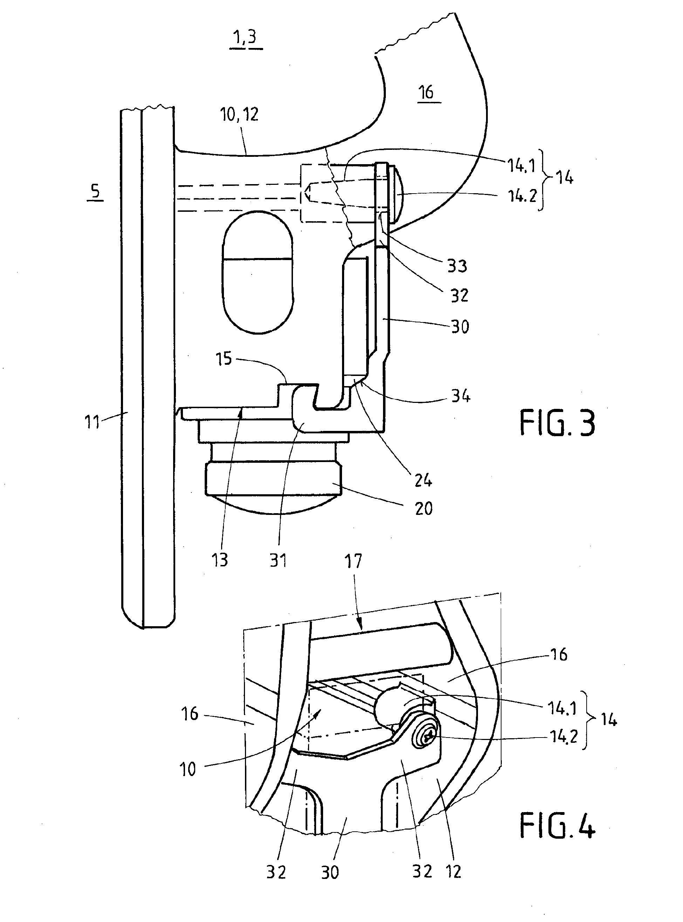

Elemente mit gleicher Funktion und Wirkungsweise sind in den Fig. 1 und 4 jeweils mit denselben Bezugszeichen versehen.

In der Figur 1 ist eine erfindungsgemäße Vorrichtung als Diebstahlschutz für eine Kameraeinheit 20 gezeigt, wobei die Kameraeinheit fest an einem beweglichen Schutzelement 11 befestigt ist. Das Schutzelement 11 ist eine Art Deckel, der drehbar am Kraftfahrzeug gelagert ist. Im vorliegenden Ausführungsbeispiel ist das Schutzelement 11 drehbar um die Achse 6 gelagert, wobei das Schutzelement 11 zwischen einer Offenstellung 2, die in Figur 1 gezeigt ist, und einer Schließstellung 1, die in Figur 3 gezeigt ist, bewegt werden kann. Die Kameraeinheit 20 dient zur Bilderfassung des Außenbereiches 5 des Kraftfahrzeuges, wobei in der Offenstellung 2 des Schutzelementes 11 die Kameraeinheit 20 sich in der Betriebslage 4 befindet und aktiv eine Bilderfassung des Außenbereiches 5 vornehmen kann.

In der Schließstellung 1 gemäß Figur 3 befindet sich die Kameraeinheit 20 hingegen in ihrer Ruhelage 3, bei der die Kameraeinheit 20 beispielsweise deaktiviert sein kann.

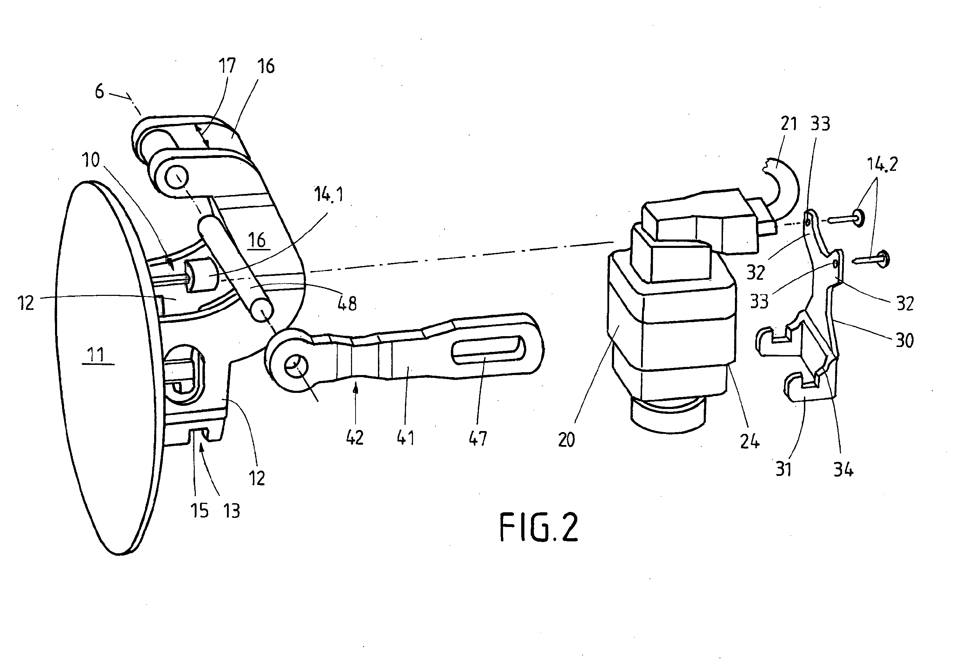

Das Schutzelement 11 weist innenseitig, auf der dem Außenbereich 5 abgewandten Seite des Schutzelementes 11 eine Aufnahme 10 für die Kameraeinheit 20 auf. Wie auch Figur 2 verdeutlicht, weist die Aufnahme 10 im vorliegenden Ausführungsbeispiel zwei parallel zueinander ausgerichtete Wände 12 auf, zwischen denen die Kameraeinheit 20 angeordnet werden kann. Im vorliegenden Ausführungsbeispiel ist die Aufnahme 10 mit ihren Wänden 12 einstückig mit dem Schutzelement 11 verbunden und bildet somit ein monolithisches Bauteil. Damit die Kameraeinheit 20 zuverlässig in der Aufnahme 10 gehalten ist, ist ein Sicherungselement 30 vorgesehen. Zudem sind Befestigungsmittel 14 vorgesehen, mit denen das Sicherungselement 30 innenseitig des Schutzelementes 11 befestigt werden kann. Im vorliegenden Ausführungsbeispiel sind mehrere Befestigungsmittel 14 vorgesehen, und zwar ein erstes Befestigungsmittel 14.1 als Gewinde, welches sich in der Aufnahme 10 bzw. in der Wand 12 der Aufnahme 10 befindet. Jede Wand 12 weist hierbei ein Gewinde 14.1 auf. Zudem ist ein zweites Befestigungsmittel 14.2 vorgesehen, das als Schraube 14.2 mit dem Gewinde 14.1 zusammen wirkt. Wie in Figur 2 und Figur 4 gezeigt ist, weist das Sicherungselement 30 im oberen Bereich zwei Arme 32 auf, die jeweils mit einer Bohrung 33 ausgestattet sind. Durch diese Bohrungen 33 verläuft jeweils ein Schraubenelement 14.2, welches gleichzeitig in dem Gewinde 14.1 der Aufnahme 10 zuverlässig gehalten ist. Somit ist das Sicherungselement 30 zuverlässig an der Aufnahme 10 befestigt.

Zudem weist das Sicherungselement 30 zwei Halteelemente 31 auf, die in die Aufnahme 10, insbesondere in mindestens eine Wand 12 eingreifen. Im speziellen Ausführungsbeispiel gemäß Figur 1 bis Figur 4 greifen die Halteelemente 31 formschlüssig in die Aufnahme 10 ein, wobei die Halteelemente 31 hakenförmig am Sicherungselement 30 ausgebildet sind, die in jeweils eine Ausnehmung 15 der Wand 12 eingreifen. Wie in Figur 2 und Figur 3 verdeutlich ist, weist das Sicherungselement 30 einen Sitz 34 auf, auf dem ein Absatz 24 der Kameraeinheit 20 aufliegt. Durch diesen Sitz 34 verjüngt sich der Querschnitt in Richtung Öffnung 13 der Aufnahme 10. Hierdurch wird erreicht, dass im montierten Zustand der Kameraeinheit 20 das Sicherungselement 30 mit den Befestigungsmitteln 14 einen zuverlässigen und diebstahlgeschützten Halt in der Aufnahme 10 gewährleisten. Da die Befestigungsmittel 14 derart vom Schutzelement 11 beabstandet sind und in der Offenstellung 2 des Schutzelementes 11 nicht vom Außenbereich 5 zu Manipulationszwecken erreicht werden können, ist ein möglicher Diebstahl der teuren Kameraeinheit 20 nahezu ausgeschlossen.

Wie in Figur 1 und Figur 3 dargestellt ist, liegt die Kameraeinheit 20 an den Wänden 12 der Aufnahme 10, innenseitig am Schutzelement 11 sowie am Sicherungselement 30 an. Die Kameraeinheit 20 ragt hierbei durch die Öffnung 13 hindurch, wobei die Öffnung 13 durch die Wände 12, das Schutzelement 11 sowie durch das Sicherungselement 30 gebildet ist. Damit das Schutzelement 11 zwischen der Schließstellung 1 und der Offenstellung 2 bewegt werden kann, ist ein Antrieb 40 gemäß Figur 1 vorgesehen, der einen Mechanismus antreibt, auf den im Folgenden eingegangen wird. Ausgehend von der Aufnahme 10 erstrecken sich zwei parallel zueinander verlaufende Schwenkelemente 16 bis zur Drehachse 6 des Schutzelementes 11. Hierbei bildet die Aufnahme 10 mit ihren Wänden 12 und den Schwenkelementen 16 ein monolithisches Bauteil. Der Antrieb 40 aus Figur 1 steht hierbei mit den Schwenkelementen 16 in Wirkverbindung, wobei der Mechanismus im vorliegenden Ausführungsbeispiel einen Hebel 41 aufweist, der bewegbar um die Drehachse 6 gelagert ist. Gleichzeitig sind der Hebel 41 mit den Schwenkelementen 16 drehfest miteinander verbunden. Der Antrieb 40 ist als Rotationsantrieb ausgestaltet, wobei der Antrieb 40 eine um eine Achse 43 drehbar gelagerte Kurbel 44 aufweist, die mit dem Hebel 41 in Wirkverbindung steht. Die Kurbel 44 weist einen Nocken 46 auf, der exzentrisch zur Achse 43 bewegt werden kann. Der Nocken 46 ist in einem Langloch 47 des Hebels 41 bewegbar gelagert. Ausgehend von Figur 1 erfolgt eine Bewegung des Schutzelementes 11 aus seiner Offenstellung 2 in Richtung Schließstellung 1, indem der Antrieb 40 die Kurbel 44 im Uhrzeigersinn dreht. Gleichzeitig bewegt sich der Nocken 46 entlang des Langloches 47 in Richtung Drehachse 6, wobei gleichzeitig der Hebel 41 gegen den Uhrzeigersinn um die Drehachse 6 sich verschwenkt. Da der Hebel 41 über die Welle 48 gemäß Figur 2 drehfest mit den Schwenkelementen 16 verbunden ist, führt das Schutzelement 11 eine Drehbewegung gegen den Uhrzeigersinn um die Drehachse 6 aus, wodurch das Schutzelement 11 in Richtung Schließstellung 1 bewegt wird.

Wie in Figur 1 angedeutet ist, ist ein an der Fahrzeugkarosserie befestigtes Gehäuse 50 vorgesehen, dass eine Einbuchtung 51 aufweist, in der sich die Kameraeinheit 20 in der Ruhelage 3 befindet. Die Befestigungsmittel 14 ragen in der Offenstellung 2 des Schutzelementes 11 in die Einbuchtung 51 des Gehäuses 50 ein, sodass ein missbräuchlicher Zugang zu den Befestigungsmitteln 14 ausgeschlossen ist. Zudem kann die Kameraeinheit 20 in ihrer Betriebslage 4 auch nicht aus der Aufnahme 10 herausgezogen werden, da das Sicherungselement 30 mit seinem Sitz 34 eine Herausbewegung der Kameraeinheit 20 aus der Öffnung 13 verhindert.

Damit der Antrieb 40 montagefreundlich an das Gehäuse 50 montiert werden kann, weist das Gehäuse 50 Rastmittel 54 auf, die mit Gegenrastmitteln 45 des Antriebes 40 zusammen wirken. Im vorliegenden Ausführungsbeispiel ist das Rastmittel 54 des Gehäuses 50 mit einer Öffnung versehen, in die das Gegenrastmittel 45 des Antriebes 40 formschlüssig eingreift. Damit eine kompakte Gesamtkonstruktion erzielbar ist, ist die Rückseite des Gehäuses 50 der Geometrie des Antriebes 40 angepasst. Wie aus Figur 1 zu erkennen ist, ist der Antrieb 40 sowie der Hebel 41 außenseitig am Gehäuse 50 angeordnet. Die Welle 48 aus Figur 2 ragt hierbei aus dem Gehäuse 50 heraus, damit der Hebel 41 an der Achse 6 angreifen kann.

Für die Offenstellung 2 und für die Schließstellung 1 ist jeweils ein Anschlag 52, 53 vorgesehen. In der Schließstellung 1 kontaktiert das Schutzelement 11 den Anschlag 52, der am Gehäuse 50 angeordnet ist. In der Offenstellung 2 greift das Schwenkelement 16 am Anschlag 53 an, der durch das Gehäuse 50 innerhalb der Einbuchtung 51 gebildet ist.

Damit in der Schließstellung 1 die Einbuchtung 51 zuverlässig vom Außenbereich 5 abgedichtet ist, kann innenseitig des Schutzelementes 11 oder am Anschlag 52 des Gehäuses 50 eine Dichtung angeordnet sein. Die Kameraeinheit 20 ist zudem über ein in Figur 1 dargestelltes Kabel 21 mit der Bordelektronik des Kraftfahrzeuges verbunden. Besonders vorteilhaft ist, dass das Kabel 21 zur Kameraeinheit 20 während der Bewegung des Schutzelementes 11 zwischen seinen Stellungen 1, 2 die Bewegung mitmacht.

Um mögliche Klappergeräusche und/oder Vibrationen am Schutzelement 11 in jeder Stellung 1, 2 zu verhindern, weist der Hebel 41 einen Bereich 42 auf, der eine größere Elastizität aufweist als der restliche Hebel 41. Kurz vor der Offenstellung 2 und der Schließstellung 1 entsteht eine leichte elastische Verformung des Hebels 41, wodurch in der anschließenden Offenstellung 2 und der Schließstellung 1 das Schutzelement 11 starr in seiner Lage gehalten wird. Der Bereich 42 ist im vorliegenden Ausführungsbeispiel gemäß Figur 1 und Figur 2 verengt ausgeführt, wodurch in diesem Bereich 42 eine größere Elastizität als im restlichen Hebel 41 erzeugt wird.

Bevorzugt kann mindestens ein nicht explizit gezeigtes Sensorelement vorgesehen sein, dass beide Lagen 1, 2 der Kameraeinheit 20 erkennen kann. Hierbei sind unterschiedliche Sensortypen denkbar, beispielsweise resistive Sensoren, induktive Sensoren, Magnetfeldsensoren, kapazitive Sensoren, piezoelektrische Sensoren oder optoelektronische Sensoren. Das Sensorelement kann beispielsweise in der Einbuchtung 51, an der Kameraeinheit 20, am Hebel 41, am Schutzelement 11, am Schwenkelement 16 oder im Freiraum 17, der durch die Beabstandung beider Wände 12 gebildet ist, angeordnet sein. Befindet sich beispielsweise die Kameraeinheit 20 in ihrer jeweiligen Lage 1, 2, erkennt dies das Sensorelement, wodurch ein Signal an den Antrieb 40 übermittelt wird, der beispielsweise deaktiviert wird.

### Bezugszeichenliste

- 1: Schließstellung
- 2: Offenstellung
- 3: Ruhelage
- 4: Betriebslage
- 5: Außenbereich
- 6: Drehachse

- 10: Aufnahme
- 11: Schutzelement
- 12: Wand
- 13: Öffnung
- 14: Befestigungsmittel
- 14.1: erstes Befestigungsmittel, Gewinde
- 14.2: zweites Befestigungsmittel, Schraube
- 15: Ausnehmung
- 16: Schwenkelement
- 17: Freiraum

- 20: Kameraeinheit
- 21: Kabel
- 24: Absatz

- 30: Sicherungselement
- 31: Halteelement
- 32: Arm
- 33: Bohrung
- 34: Sitz
- 40: Antrieb
- 41: Hebel
- 42: elastischer Bereich
- 43: Achse
- 44: Kurbel
- 45: Gegenrastmittel
- 46: Nocken
- 47: Langloch
- 48: Welle

- 50: Gehäuse
- 51: Einbuchtung
- 52: Anschlag für 1
- 53: Anschlag für 2
- 54: Rastmittel

## Patentansprüche

1. Vorrichtung als Diebstahlschutz für eine Kameraeinheit (20), die an einem beweglichen Schutzelement (11) eines Kraftfahrzeuges angeordnet ist und die Kameraeinheit (20) zur Bilderfassung des Außenbereiches (5) dient, wobei
das Schutzelement (11) zwischen einer Schließstellung (1) und einer Offenstellung (2) bewegbar ist,
in der Schließstellung (1) die Kameraeinheit (20) in der Ruhelage (3) und in der Offenstellung (2) die Kameraeinheit (20) in der Betriebslage (4) sich befindet,
das Schutzelement (11) innenseitig, auf der dem Außenbereich (5) abgewandten Seite des Schutzelementes (11) eine Aufnahme (10) für die Kameraeinheit (20) aufweist,
an der Aufnahme (10) ein Sicherungselement (30) angeordnet ist, das zuverlässig die Kameraeinheit (20) in der Aufnahme (10) hält,
mindestens ein Befestigungsmittel (14) vorgesehen ist, wodurch das Sicherungselement (30) innenseitig des Schutzelementes (11) befestigt ist und das Befestigungsmittel (14) derart vom Schutzelement (11) beabstandet ist, dass in der Offenstellung (2) des Schutzelementes (11) das Befestigungsmittel (14) nicht missbräuchlich betätigbar ist.

2. Vorrichtung nach Anspruch 1,
**dadurch gekennzeichnet,**
**dass** die Aufnahme (10) einstückig mit dem Schutzelement (11) verbunden ist.

3. Vorrichtung nach Anspruch 1 oder 2,
**dadurch gekennzeichnet,**
**dass** die Aufnahme (10) zwei Wände (12) aufweist, die die Kameraeinheit (20) seitlich umfassen.

4. Vorrichtung nach einem der vorhergehenden Ansprüche,
**dadurch gekennzeichnet,**
**dass** das Sicherungselement (30) mindestens ein Halteelement (31) aufweist, das in die Aufnahme (10), insbesondere in mindestens eine Wand (12) eingreift.

5. Vorrichtung nach einem der vorhergehenden Ansprüche,
**dadurch gekennzeichnet,**
**dass** die Kameraeinheit (20) an Wänden (12) der Aufnahme (10), innenseitig am Schutzelement (11) sowie am Sicherungselement (30) anliegt, wobei die Kameraeinheit (20) durch eine Öffnung (13) hindurchragt, wobei die Öffnung (13) durch die Wände (12), das Schutzelement (11) sowie durch das Sicherungselement (30) gebildet ist.

6. Vorrichtung nach Anspruch 5,
**dadurch gekennzeichnet,**
**dass** das Sicherungselement (30) und/oder die Aufnahme (10) derart zur Außenkontur der Kameraeinheit (20) angepasst ist, dass die Kameraeinheit (20) aus der Öffnung (13) nicht entnehmbar ist.

7. Vorrichtung nach einem der vorhergehenden Ansprüche,
**dadurch gekennzeichnet,**
**dass** das/die Befestigungsmittel (14) mindestens ein erstes Befestigungsmittel (14.1) an der Aufnahme (10) und/oder ein zweites Befestigungsmittel (14.2) aufweist, wobei insbesondere das erste (14.1) und das zweite Befestigungsmittel (14.2) derart zusammenwirken, dass eine Befestigung des Sicherungselementes (30) in der Aufnahme (10) erzielbar ist.

8. Vorrichtung nach Anspruch 7,
**dadurch gekennzeichnet,**
**dass** das erste Befestigungsmittel (14.1) ein Gewinde (14.1) ist, das in der Aufnahme (10) eingebracht ist, wobei in das Gewinde (14.1) das zweite Befestigungsmittel (14.2) als Schraubenelement (14.2), das durch eine Bohrung (33) des Sicherungselementes (30) verläuft, eingreift.

9. Vorrichtung nach einem der vorhergehenden Ansprüche,
**dadurch gekennzeichnet,**
**dass** das Sicherungselement (30) an der dem Halteelement (31) gegenüberliegenden Seite mit zwei Armen (32) ausgeführt ist, durch die das erste und/oder das zweite Befestigungsmittel (14) sich erstreckt.

10. Vorrichtung nach einem der vorhergehenden Ansprüche,
**dadurch gekennzeichnet,**
**dass** mindestens zwei Halteelemente (31) vorgesehen sind, die formschlüssig in die Aufnahme (10) eingreifen, insbesondere zwei Halteelemente (31) hackenförmig am Sicherungselement (30) ausgebildet sind, die in jeweils eine Ausnehmung (15) der Aufnahme (10) eingreifen.

11. Vorrichtung nach einem der vorhergehenden Ansprüche,
**dadurch gekennzeichnet,**
**dass** ausgehend von der Aufnahme (10) mindestens ein Schwenkelement (16) bis zu einer Drehachse (6) des Schutzelementes (11) sich erstreckt, insbesondere dass die Aufnahme (10) mit dem Schwenkelement (16) ein monolithisches Bauteil bildet.

12. Vorrichtung nach einem der vorhergehenden Ansprüche,
**dadurch gekennzeichnet,**
**dass** die Kameraeinheit (20) unbeweglich in der Aufnahme (10) gehalten ist.

13. Vorrichtung nach einem der vorhergehenden Ansprüche,
**dadurch gekennzeichnet,**
**dass** ein Antrieb (40) vorgesehen ist, der einen Mechanismus antreibt, der mit dem Schwenkelement (16) in Wirkverbindung steht.

14. Vorrichtung nach Anspruch 13,
**dadurch gekennzeichnet,**
**dass** der Mechanismus einen Hebel (41) aufweist, der bewegbar um die Drehachse (6) gelagert ist, wobei gleichzeitig der Hebel (41) mit dem Schwenkelement (16) drehfest miteinander verbunden sind.

15. Vorrichtung nach einem der vorhergehenden Ansprüche,
**dadurch gekennzeichnet,**
**dass** ein an der Fahrzeugkarosserie befestigtes Gehäuse (50) vorgesehen ist, das eine Einbuchtung (51) aufweist, in der sich die Kameraeinheit (20) in der Ruhelage (3) befindet.

16. Vorrichtung nach einem der vorhergehenden Ansprüche,
**dadurch gekennzeichnet,**
**dass** für die Offenstellung (2) und/oder für die Schließstellung (1) mindestens ein Anschlag (52, 53) für den Mechanismus vorgesehen ist, wobei insbesondere in der Schließstellung (1) der Anschlag (52) durch das Gehäuse (50) gebildet ist, an dem das Schutzelement (11) angreift, und/oder
in der Offenstellung (2) der Anschlag (53) durch das Gehäuse (50) gebildet ist, an dem das Schwenkelement (16) angreift.

17. Vorrichtung nach einem der vorhergehenden Ansprüche,
**dadurch gekennzeichnet,**
**dass** der Hebel (41) einen Bereich (42) aufweist, der eine größere Elastizität aufweist als der restliche Hebel (41), wobei kurz vor der Offenstellung (2) und/oder der Schließstellung (1) eine leichte elastische Verformung des Hebels (41) entsteht, wodurch in der anschließenden Offenstellung (2) und/oder der Schließstellung (1) das Schutzelement (11) eine Vibrationsfestigkeit aufweist, wobei insbesondere der Bereich (42) des Hebels (41) verengt ist und/oder der Bereich (42) zwischen der Drehachse (6) und dem Antrieb (40) liegt.

18. Vorrichtung nach einem der vorhergehenden Ansprüche,
**dadurch gekennzeichnet,**
**dass** der Antrieb (40) und/oder der Hebel (41) außenseitig am Gehäuse (50) angeordnet ist.

19. Vorrichtung nach einem der vorhergehenden Ansprüche,
**dadurch gekennzeichnet,**
**dass** der Antrieb (40) ein Linearantrieb oder ein Rotationsantrieb ist, wobei der Antrieb (40) eine um eine Achse (43) drehbar gelagerte Kurbel (44) aufweist, die mit dem Hebel (41) in Wirkverbindung steht.

## Claims

1. Device as theft protection for a camera unit (20) of a motor vehicle that is arranged on a movable protection element (11) of a motor vehicle, and the camera unit (20) serves to capture images of the outside area (5), wherein
the protection element (11) is movable between a closed position (1) and an open position (2),
in the closed position (1) the camera unit (20) is in the idle position (3) and in the open position (2) the camera unit (20) is in the operating position (4),
the protection element (11) has a mounting (10) for the camera unit (20) on the inside thereof, on the side of the protection element (11) facing away from the outside area (5);
a security element (30) is arranged on the mounting (10) and holds the camera unit (20) reliably in the mounting (10),
at least one fastening means (14) is provided by means of which the security element (30) is fastened to the inside of the protection element (11), and the fastening means (14) is arranged at such a distance from the protection element (11) that when the protection element (11) is in the open position (2) it is not possible for the fastening means (14) to be tampered with.

2. The device according to claim 1, **characterised in that** the mounting (10) attached integrally with the protection element (11).

3. The device according to either of claims 1 or 2, **characterised in that** the mounting (10) has two walls (12) that enclose the sides of the camera unit (20).

4. The device according to any one of the preceding claims, **characterised in that** the security element (30) comprises at least one retaining element (31), which engages in the mounting (10), particularly in at least one wall (12).

5. The device according to any one of the preceding claims, **characterised in that** the camera unit (20) lies flush with walls (12) of the mounting (10) on the inside of the protection element (11) and on the security element (30), wherein the camera unit (20) protrudes through an opening (13), wherein the opening (13) is formed by the walls (12), the protection element (11) and the security element (30).

6. The device according to claim 5, **characterised in that** the security element (30) and/or the mounting (10) is conformed to the outer contour of the camera unit (20) in such manner that the camera unit (20) cannot be removed through the opening (13).

7. The device according to any one of the preceding claims, **characterised in that** the one or more fastening means (14) have/has at least a first fastening means (14.1) on the mounting (10), and/or a second fastening means (14.2), wherein in particular the first fastening means (14.1) and the second fastening means (14.2) cooperate such that it is possible to create a fastening for the security element (30) in the mounting (10).

8. The device according to claim 7, **characterised in that** the first fastening means (14.1) is a screw thread (14.1) that is incorporated in the mounting (10), wherein the second fastening means (14.2) engages in the screw thread (14.1) as a screw element (14.2) that extends through a borehole (33) in the security element (30).

9. The device according to any one of the preceding claims, **characterised in that** the side of the security element (30) opposite the side thereof with the retaining element (31) is designed with two arms (32), through which the first and/or second fastening means (14) extend.

10. The device according to any one of the preceding claims, **characterised in that** at least two retaining elements (31) are provided that engage in mounting (10) in positive locking manner, particularly two retaining elements (31) are provided on the security element (30) in the shape of hooks, each of which engages in a notch (15) in the mounting (10).

11. The device according to any one of the preceding claims, **characterised in that** proceeding from the mounting (10), at least one pivoting element (16) extends as far as an axis of rotation (6) of the protection element (11), in particular that the mounting (10) and the pivoting element (16) together form a monolithic component.

12. The device according to any one of the preceding claims, **characterised in that** the camera unit (20) is held immovably in the mounting (10).

13. The device according to any one of the preceding claims, **characterised in that** a drive unit (40) is provided and drives a mechanism that is operatively connected to the pivoting element (16).

14. The device according to claim 13, **characterised in that** the mechanism comprises a lever (41) that is mounted so as to be movable about the axis of rotation (6), wherein at the same time the lever (41) and the pivoting element (16) are connected in non-rotatable manner to each other.

15. The device according to any one of the preceding claims, **characterised in that** a housing (50) is provided and fastened to a body of a motor vehicle, said housing having an indentation (51) in which the camera unit (20) is accommodated in the idle position (3).

16. The device according to any one of the preceding claims,
**characterised in that**
at least one limit stop (52, 53) is provided for the mechanism, for the open position (2) and/or for the closed position (1), wherein particularly
in the closed position (1) the limit stop (52) is formed by the housing (50), on which the protection element (11) acts, and/or
in the open position (2) the limit stop (53) is formed by the housing (50) on which the pivoting element (16) acts.

17. The device according to any one of the preceding claims, **characterised in that** the lever (41) has a region (42) that has greater elasticity than the rest of the lever (41), wherein a slight elastic deformation of the lever (41) occurs shortly before the open position (2) and/or the closed position (1), whereby the protection element (11) is endows with vibration resistance in the subsequent open position (2) and/or closed position (1), wherein in particular the region (42) of the lever (41) is narrowed and/or the region (42) is located between the axis of rotation (6) and the drive unit (40).

18. The device according to any one of the preceding claims, **characterised in that** the drive unit (40) and/or the lever (41) is arranged on the outside of the housing (50).

19. The device according to any one of the preceding claims, **characterised in that** the drive unit (40) is a linear drive or a rotary drive, wherein the drive unit (40) has a crank (44) that is mounted rotatably mounted about a shaft (43) that is operatively connected to the lever (41).

## Revendications

1. Dispositif de protection antivol pour une unité de caméra (20), qui est disposée sur un élément de protection mobile (11) d'un véhicule à combustion interne et l'unité de caméra (20) sert à saisir des images de la zone extérieure (5), dans lequel l'élément de protection (11) est déplaçable entre une position de fermeture (1) et une position d'ouverture (2), l'unité de caméra (20) dans la position de fermeture (1) se trouve dans la position de repos (3) et dans la position d'ouverture (2) se trouve dans la position de fonctionnement (4), l'élément de protection (11) présente du côté intérieur, sur le côté de l'élément de protection (11) qui se détourne de la zone extérieure (5) un réceptacle (10) pour l'unité de caméra (20), sur le réceptacle (10) un élément de fixation (30) est disposée, qui retient de manière fiable l'unité de caméra (20) dans le réceptacle (10), au moins un moyen de fixation (14) est prévu, moyennant quoi l'élément de sécurité (30) est fixé du côté intérieur de l'élément de protection (11) et le moyen de fixation (14) est espacé de l'élément de protection (22), de telle sorte que dans la position d'ouverture (2) de l'élément de protection (11) le moyen de fixation (14) ne puisse pas être actionné de manière inappropriée.

2. Dispositif selon la revendication 1, **caractérisé en ce que** le réceptacle (10) est relié en un seul tenant avec l'élément de protection (11).

3. Dispositif selon la revendication 1 ou 2, **caractérisé en ce que** le réceptacle (10) présente deux parois (12), qui encadrent latéralement l'unité de caméra (20).

4. Dispositif selon une des revendications précédentes, **caractérisé en ce que** l'élément de fixation (30) présente au moins un élément de retenue (31), qui vient en prise dans l'évidement (10), notamment dans au moins une paroi (12).

5. Dispositif selon une des revendications précédentes, **caractérisé en ce que** l'unité de caméra (20) vient reposer sur les parois (12) du réceptacle (10), du côté intérieur sur l'élément de protection (11) ainsi que sur l'élément de fixation (30), dans lequel l'unité de caméra (20) dépasse à travers une ouverture (13), dans lequel l'ouverture (13) est formée par les parois (12), l'élément de protection (11) ainsi que par l'élément de fixation (30).

6. Dispositif selon la revendication 5, **caractérisé en ce que** l'élément de fixation (30) et/ou le réceptacle (10) est adapté au contour extérieur de l'unité de caméra (20) de telle sorte que l'unité de caméra (20) ne puisse pas être retirée de l'ouverture (13).

7. Dispositif selon une des revendications précédentes, **caractérisé en ce que** le moyen de fixation (14) présente au moins un premier moyen de fixation (14.1) sur le réceptacle (10) et/ou un deuxième moyen de fixation (14.2), dans lequel notamment le premier (14.1) et le deuxième moyen de fixation (14.2) coopèrent de telle sorte qu'une fixation de l'élément de sécurité (30) dans le réceptacle (10) puisse être obtenue.

8. Dispositif selon la revendication 7, **caractérisé en ce que** le premier moyen de fixation (14.1) est un filetage (14.1), qui est ménagé dans le réceptacle (10), dans lequel le deuxième moyen de fixation (14.2) vient en prise dans le logement (14.1) comme élément vissable (14.2), qui s'étend à travers un alésage (33) de l'élément de fixation (30).

9. Dispositif selon une des revendications précédentes, **caractérisé en ce que** l'élément de fixation (30) est réalisé sur le côté opposé à l'élément de retenue (31) avec deux bras, à travers lesquels s'étend le premier et/ou le deuxième moyen de fixation (14).

10. Dispositif selon une des revendications précédentes, **caractérisé en ce que** au moins deux éléments de retenue (31) sont prévus, qui viennent en prise par conjonction de forme dans le logement (10), notamment deux éléments de retenue (31) en forme de crochet sur l'élément de fixation (30) sont réalisés, qui viennent en prise dans respectivement un évidement (15) du réceptacle (10).

11. Dispositif selon une des revendications précédentes, **caractérisé en ce que** à partir du réceptacle (10) au moins un élément pivotant (16) s'étend jusqu'à un axe de rotation (6) de l'élément de protection (11), notamment **en ce que** le réceptacle (10) forme un composant monolithique avec l'élément pivotant (16).

12. Dispositif selon une des revendications précédentes, **caractérisé en ce que** l'unité de caméra (20) est maintenue de manière immobile dans le réceptacle (10).

13. Dispositif selon une des revendications précédentes, **caractérisé en ce que** un entraînement (40) est prévu, qui entraîne un mécanisme, qui est en liaison opérationnelle avec l'élément pivotant (16).

14. Dispositif selon la revendication 13, **caractérisé en ce que** le mécanisme présente un levier (41), qui est positionné de manière mobile autour de l'axe de rotation (6), dans lequel simultanément le levier (41) est relié de manière solidaire en rotation avec l'élément pivotant (16).

15. Dispositif selon une des revendications précédentes, **caractérisé en ce que** un logement (50) fixé sur la carrosserie du véhicule est prévu, qui présente un renfoncement (51), dans lequel l'unité de caméra (20) se trouve dans la position de repos (3).

16. Dispositif selon une des revendications précédentes, **caractérisé en ce que** pour la position d'ouverture (2) et/ou la position de fermeture (1) au moins une butée (52,53) est prévue pour le mécanisme, dans lequel notamment dans la position de fermeture (1) la butée (52) est formée par le logement (50), sur lequel l'élément d'appui (11) vient reposer et/ou dans la position d'ouverture (2) la butée (53) est formée par le logement (50), sur lequel l'élément pivotant (16) vient reposer.

17. Dispositif selon une des revendications précédentes, **caractérisé en ce que** le levier (41) présente une zone (42), qui présente une plus grande élasticité que le reste du levier (41), dans lequel peu avant la position d'ouverture (2) et/ou la position de fermeture (1) une légère déformation élastique du levier (41) est produite, moyennant quoi dans la position d'ouverture (2) et/ou la position de fermeture successive, l'élément de protection (11) présente une résistance aux vibrations, dans lequel notamment la zone (42) du levier (41) est rétrécie et/ou la zone (42) est située entre l'axe de rotation (6) et l'entraînement (40).

18. Dispositif selon une des revendications précédentes, **caractérisé en ce que** l'entraînement (40) et/ou le levier (41) est disposé du côté extérieur sur le logement (50).

19. Dispositif selon une des revendications précédentes, **caractérisé en ce que** l'entraînement (40) est un entraînement linéaire ou un entraînement rotatif, dans lequel l'entraînement (40) présente une manivelle (44) positionnée rotativement autour d'un axe (43), qui est en liaison opérationnelle avec le levier (41).
